# EUROPÄISCHE PATENTSCHRIFT

(11) **EP 3 320 600 B1**
(45) Veröffentlichungstag und Bekanntmachung des Hinweises auf die Patenterteilung: **27.11.2019**
(21) Anmeldenummer: 16738386.8
(22) Anmeldetag: 07.07.2016
(51) Int. Cl.: H02K 1/16, H02K 3/12, H02K 3/28, H02K 15/02, H02K 15/085, H02K 3/52

(54) **STATORANORNDUNG, ELEKTRISCHE DREHSTROMMASCHINE UND VERFAHREN ZUM HERSTELLEN EINER STATORANORDNUNG**
STATOR ARRANGEMENT, ELECTRIC THREE-PHASE MACHINE AND METHOD FOR PRODUCING A STATOR ARRANGEMENT
ARRANGEMENT DE STATOR, MACHINE ÉLECTRIQUE À COURANT TRIPHASÉ ET PROCÉDÉ DE FABRICATION D'UN ARRANGEMENT DE STATOR

(30) Priorität: 09.07.2015 DE 102015212821
(43) Veröffentlichungstag der Anmeldung: 16.05.2018
(73) Patentinhaber: Brose Fahrzeugteile GmbH&Co. Kommanditgesellschaft, 97076 Wuerzburg (DE)
(72) Erfinder: WÜST, Stefan, 97816 Lohr am Main (DE); FIEDERLING, Daniel, 97877 Wertheim (DE); STRAUSS, Wolfgang, 97294 Unterpleichfeld (DE)
(74) Vertreter: Isarpatent
(86) Internationale Anmeldenummer: PCT/EP2016/066081
(87) Internationale Veröffentlichungsnummer: WO 2017/005836

(56) Entgegenhaltungen:
- EP-A2- 2 457 864
- DE-A1-102012 016 914
- US-A1- 2015 188 378

## Beschreibung

### GEBIET DER ERFINDUNG

Die vorliegende Erfindung betrifft eine Statoranordnung, eine elektrische Drehstrommaschine und ein Verfahren zum Herstellen einer Statoranordnung.

### TECHNISCHER HINTERGRUND

Elektromotoren sind elektrische Maschinen, die in vielen Ausführungsformen existieren. So existieren auch Elektromotoren mit Sternschaltung. Eine solche Sternschaltung ist die Zusammenschaltung von z.B. drei Anschlüssen über einen Widerstand an einen gemeinsamen Punkt. Der so entstandene Zusammenschluss bildet den Mittelpunkt, der auch Sternpunkt oder Neutralpunkt genannt wird. Eine Sternpunktschaltung hat den Vorteil, dass man bei symmetrischer Belastung, d.h. die drei Laststränge haben jeweils die gleiche Impedanz, zwei unterschiedliche Spannungen abgreifen kann.

Bei Elektromotoren wird für die Statorwicklungen der Sternpunktschaltung bisweilen eine Schaltscheibe eingesetzt. Hierbei ist es notwendig, dass jede einzelne Statorwicklung durch einen eigenen Wicklungsdraht gewickelt und im Sternpunkt kontaktiert wird. Die Bildung dieses Sternpunktes ist kostenintensiv, da mehrere komplexe Verfahrensschritte erforderlich sind.

Die DE 10 2011 082 665 A1 beschreibt einen Stator für eine elektrische Maschine, mit einer Mehrzahl von Statorsegmenten, die einen Statorring bilden und Trägerzähne zur Aufnahme bestrombarer Spulen sowie radial außen liegende, die Außenseite des Statorrings bildende Jochsegmente aufweisen, welche Träger der radial nach innen gerichteten Trägerzähne sind, wobei jedes Statorsegment drei Trägerzähne zur Aufnahme jeweils einer Spule umfasst und wobei sämtliche Spulen eines Statorsegments aus einem gemeinsamen, durchgehenden Spulendraht gewickelt sind.

Auch bei diesem Stator sind für die Bildung des Sternpunktes mehrere Arbeitsschritte notwendig, da die einzelnen Spulendrähte der Statorsegmente erst separat gewickelt, und dann anschließend zur Bildung eines Sternpunktes verbunden werden müssen.

Aus der US 2015/0188378 A1 ist ein Stator bekannt, der eine Vielzahl von Statorkernen umfasst, die geteilt und radial angeordnet sind. Dabei ist eine Spule auf einer Außenfläche jedes der Statorkerne gewickelt. Der Stator weist eine obere Befestigungsplatte auf, an der die Statorkerne radial angeordnet sind. Weiter weist der Stator eine untere Befestigungsplatte auf, die an der Unterseite der Statorkerne angeordnet ist und mit der oberen Befestigungsplatte verbunden ist.

Die DE 10 2012 016 914 A1 beschreibt des Weiteren einen Stator für einen Elektromotor, welcher einen Statorkörper mit radial verlaufenden Armen aufweist, die von einem inneren Ring abstehen.

Die EP 2 457 864 A2 offenbart eine elektrische Maschine, die eine axial an der Maschine angeordnete Drahtführungsvorrichtung aufweist, an der mehrere Rillen zum Führen der einzelnen Drähte der Phasen angeordnet sind.

### ZUSAMMENFASSUNG DER ERFINDUNG

Vor diesem Hintergrund ist es eine Aufgabe der vorliegenden Erfindung, eine einfachere Verschaltung der Statorwicklungen zu ermöglichen.

Diese Aufgabe wird erfindungsgemäß durch eine Statoranordnung mit den Merkmalen des Patentanspruchs 1, durch eine elektrische Drehstrommaschine mit den Merkmalen des Patentanspruchs 9, und durch ein Verfahren zum Herstellen einer Statoranordnung mit den Merkmalen des Patentanspruchs 10 gelöst.

### Demgemäß ist vorgesehen:

Eine Statoranordnung für eine elektrische Drehstrommaschine, mit einer Vielzahl von Statorzähnen, mit einer Kontaktiereinrichtung, welche an einem Endabschnitt der Statorzähne angeordnet ist, mit einem durchgängig gewickelten Wicklungsdraht, welcher jeweils um einzelne Statorzähne zur Bildung von Statorzahnwicklungen gewickelt ist und welcher zwischen den einzelnen Statorzähnen abschnittweise an der Kontaktiereinrichtung angeordnet ist, mit einem Verschaltungselement, welches an der Kontaktiereinrichtung derart angeordnet und ausgebildet ist, um an der Kontaktiereinrichtung unmittelbar benachbart angeordnete Abschnitte des Wicklungsdrahtes zur Bildung eines Sternpunktes elektrisch zu verbinden.

Ferner wird eine elektrische Drehstrommaschine mit einer erfindungsgemäßen Statoranordnung zur Verfügung gestellt.

Des Weiteren wird ein Verfahren zum Herstellen einer Statoranordnung mit den folgenden Schritten zur Verfügung gestellt: Bereitstellen einer Vielzahl von Statorzähnen, Anordnen einer Kontaktiereinrichtung auf einer Endfläche der Statorzähne, unterbrechungsfreies Bewickeln einzelner Statorzähne zur Bildung von Statorzahnwicklungen mit einem Wicklungsdraht und Anordnen des Wicklungsdrahts an der Kontaktiereinrichtung; elektrisches Verbinden von Abschnitten des auf der Kontaktiereinrichtung angeordneten Wicklungsdrahts zur Bildung eines Sternpunktes.

Die der vorliegenden Erfindung zugrunde liegende Idee besteht darin, eine Statoranordnung mit einer Sternschaltung mithilfe einer Kontaktiereinrichtung mit einem durchgängig gewickelten Wicklungsdraht auszubilden, und den Sternpunkt mithilfe eines Verschaltungselementes auszubilden. Auf diese Weise kann der Wicklungsprozess für die Statoranordnung automatisiert und mit nur wenigen Verfahrensschritten ausgeführt werden. Mehrere, getrennt voneinander gewickelte Wicklungen und häufige Trennvorgänge des Wicklungsdrahtes zwischen den Wicklungsvorgängen sind durch diese Ausbildung einer Statoranordnung nicht mehr notwendig. Dadurch kann die Herstellungszeit zur Herstellung der Statoranordnung signifikant reduziert werden, was sich in geringeren Herstellkosten bemerkbar macht. Ferner wird weniger Draht benötigt, da der Stator durchgängig gewickelt werden kann, und keine langen Verschaltungswege benötigt werden. Überdies wird es durch diese Ausbildung möglich, die Statoranordnung mit einer kürzeren axialen Baulänge auszubilden, da weniger axiale Wicklungsdrahtlagen als bei einer vergleichbaren Dreiecksschaltung benötigt werden.

Die Kontaktiereinrichtung ist an einem Endabschnitt der Statorzähne angeordnet. Beispielsweise ist die Kontaktiereinrichtung auf einer Endfläche der Statorzähne angeordnet, welche nicht zur Aufnahme des Wicklungsdrahtes dient. Es ist z. B. auch möglich, dass die Kontaktiereinrichtung sich um die Statorzähne erstreckt oder auf der Mantelfläche des Stators angeordnet ist.

Ferner wird durch diese Ausbildung einer Statoranordnung es möglich, dass der Sternpunkt, falls notwendig, ohne größeren Aufwand aufgetrennt werden kann, und dadurch ein völlig redundantes Wicklungssystem entsteht, wie es z. B. bei Lenkungsmotoren erforderlich ist.

Ein weiterer Vorteil der erfindungsgemäßen Statoranordnung ist es, dass der Sternpunkt, der durch das elektrische Verbinden der Abschnitte des auf der Kontaktiereinrichtung angeordneten Wicklungsdrahts gebildet wird, lokal an einer Stelle ausgebildet ist. Die zu verbindenden Abschnitte des Wicklungsdrahtes sind unmittelbar benachbart zueinander angeordnet, sodass das Verbinden der Abschnitte des Wicklungsdrahts sehr einfach erfolgen kann, und das Verschaltungselement kostengünstig und hergestellt werden kann. Somit kann die Verschaltung der Abschnitte des Wicklungsdrahtes sehr einfach und ohne größeren Aufwand erfolgen.

Erfindungsgemäß weist die Kontaktiereinrichtung eine Vielzahl von Drahtführungen auf, welche an der Außenfläche der Kontaktiereinrichtung vorgesehen sind und welche derart angeordnet und ausgebildet sind, die an der Kontaktiereinrichtung angeordneten Abschnitte des Wicklungsdrahtes ortsfest zu positionieren. Auf diese Weise kann die Gefahr eines Kurzschlusses reduziert werden, da die Abschnitte des Wicklungsdrahtes räumlich voneinander getrennt sind, und auf diese Weise gut voneinander isoliert werden. Die Drahtführungen können die Abschnitte des Wicklungsdrahtes form- und/oder kraftschlüssig aufnehmen, wodurch die Abschnitte besonders gut positioniert werden können.

Weitere vorteilhafte Ausgestaltungen und Weiterbildungen ergeben sich aus den weiteren Unteransprüchen sowie aus der Beschreibung unter Bezugnahme auf die Figuren der Zeichnung.

In einer vorteilhaften Ausgestaltung ist das Verschaltungselement als Klemme und/oder als Schweißverbindung und/oder als Schneidklemmkontakt ausgebildet. Beispielsweise kann eine Klemme verwendet werden, welche drei oder mehr Ausnehmungen aufweist, welche jeweils die zu verschaltenden Abschnitte des Wicklungsdrahts form- und/oder kraftschlüssig aufnehmen. Durch diese Ausbildung des Verschaltungselements kann die Verschaltung auf sehr einfache und sichere Weise erfolgen. Als Verschaltungselement kann jedoch auch eine Schweißverbindung dienen. Ebenfalls ist möglich, lediglich ein Stück Draht zur Ausbildung des Sternpunktes zu verwenden. Auch ein Schneidklemmkontakt ist als Verschaltungselement geeignet. Ein Vorteil der Verwendung eines Schneidklemmkontaktes ist es, dass weder Löten, Schrauben noch Abisolieren des Wicklungsdrahtes zum Ausbilden des Sternpunktes notwendig sind. Auch eine andere LSA-Technik kann zur Ausbildung des Sternpunktes verwendet werden.

In einer weiteren vorteilhaften Ausgestaltung weist die Kontaktiereinrichtung einen ringförmigen Grundkörper aus Kunststoff auf. Der Grundkörper weist vorzugsweise denselben Außendurchmesser wie der Stator auf. Vorteilhafterweise ist die Kontaktiereinrichtung als Kunststoff-Spritzgussteil ausgebildet, wodurch die Herstellungskosten zusätzlich gesenkt werden können.

In einer weiteren vorteilhaften Ausgestaltung weist die Kontaktiereinrichtung auf der den Statorzähnen zugewandten Seite Positionierungsstifte auf, welche derart angeordnet und ausgebildet sind, die Kontaktiereinrichtung bezüglich der Statorzähne zu positionieren. Auf diese können Fehler bei der Herstellung der Statoranordnung und insbesondere bei Verschaltung der Abschnitte des Wicklungsdrahtes vermieden werden, da die Kontaktiereinrichtung stets richtig bezüglich der Statorzähne ausgerichtet ist.

In einer weiteren vorteilhaften Ausgestaltung sind die Drahtführungen an der Außenfläche der Kontaktiereinrichtung in mehreren Reihen angeordnet. Beispielsweise weist die Kontaktiereinrichtung drei oder mehr Reihen von Drahtführungen auf, wobei eine Reihe für die erste Phase, eine zweite Reihe für eine zweite Phase, und eine dritte Reihe für eine dritte Phase vorgesehen ist.

In einer weiteren vorteilhaften Ausgestaltung weisen die Reihen von Drahtführungen Drahtübergangsbereiche auf, welche derart angeordnet und ausgebildet sind, den Wicklungsdraht von einer Reihe von Drahtführungen zu einer weiteren Reihe von Drahtführungen zu führen. Die Drahtübergangsbereiche sind z. B. als Ausnehmungen ausgebildet, und ermöglichen eine Überführung des Wicklungsdrahtes von einer Reihe zu einer weiteren Reihe von Drahtführungen.

In einer weiteren vorteilhaften Ausgestaltung weist die Kontaktiereinrichtung eine Vielzahl von Drahtdurchführungen auf, welche auf der den Statorzähnen abgewandten Seite an der Außenfläche der Kontaktiereinrichtung vorgesehen sind und welche zur Durchführung des Wicklungsdrahtes durch die Kontaktiereinrichtung ausgebildet sind. Die Drahtdurchführungen sind vorteilhafterweise als Nuten ausgebildet sind, welche eine vorbestimmte Länge aufweisen, um den Wicklungsdraht bezüglich einer Drahtführung zu positionieren. Auf diese Weise können Fehler beim Bewickeln der Statorzähne vermieden werden, da die Nuten den Wicklungsdraht auf der vorbestimmten Reihe von Drahtführung anordnen.

In einer weiteren vorteilhaften Ausgestaltung ist zumindest ein weiteres Verschaltungselement vorgesehen, welches an der Kontaktiereinrichtung angeordnet und ausgebildet ist, die an der Kontaktiereinrichtung angeordneten Abschnitte des Wicklungsdrahtes zur Bildung zumindest eines zweiten Sternpunktes elektrisch zu verbinden. Hierfür kann der Wicklungsdraht aufgetrennt werden, sodass eine Trennstelle zwischen den zwei Sternpunkten gebildet wird. Auf diese Weise werden zwei parallele und redundante Sternschaltungen geschaffen, wodurch die Betriebssicherheit der elektrischen Maschine gesteigert werden kann. Der zweite Sternpunkt kann räumlich gesehen an der gleichen Stelle oder in der unmittelbaren Nähe des ersten Sternpunktes ausgebildet sein. Auf diese Weise kann die Bildung des zweiten Sternpunktes auf sehr einfache Weise erfolgen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch einzelne Aspekte als Verbesserungen oder Ergänzungen zu der jeweiligen Grundform der vorliegenden Erfindung hinzufügen.

### KURZE BESCHREIBUNG DER FIGUREN

Die vorliegende Erfindung wird nachfolgend anhand der in den schematischen Figuren der Zeichnungen angegebenen Ausführungsbeispiele näher erläutert. Es zeigen dabei:
- Fig. 1: eine perspektivische Ansicht einer erfindungsgemäßen Statoranordnung gemäß einer ersten Ausführungsform;
- Fig. 2: eine perspektivische Ansicht der Kontaktiereinrichtung gemäß der ersten Ausführungsform;
- Fig. 3: eine Ansicht eines Ausschnittes der Kontaktiereinrichtung gemäß der ersten Ausführungsform;
- Fig. 4: eine Ansicht des Verschaltungselements gemäß der ersten Ausführungsform;
- Fig. 5: eine perspektivische Ansicht der Statoranordnung gemäß der ersten Ausführungsform;
- Fig. 6: eine perspektivische Ansicht der Statoranordnung gemäß der ersten Ausführungsform;
- Fig. 7: eine perspektivische Ansicht der Statoranordnung gemäß der ersten Ausführungsform;
- Fig. 8: eine Schnittansicht der Statoranordnung gemäß der ersten Ausführungsform;
- Fig. 9: eine perspektivische Ansicht einer erfindungsgemäßen elektrischen Maschine gemäß einer ersten Ausführungsform;
- Fig. 10: eine perspektivische Ansicht der elektrischen Maschine gemäß der ersten Ausführungsform;
- Fig. 11: eine perspektivische Ansicht der Statoranordnung gemäß der ersten Ausführungsform;
- Fig. 12: eine perspektivische Ansicht einer erfindungsgemäßen Statoranordnung gemäß einer zweiten Ausführungsform;
- Fig. 13: eine perspektivische Ansicht einer Kontaktiereinrichtung gemäß der zweiten Ausführungsform;
- Fig. 14: eine Ansicht eines Ausschnittes der Kontaktiereinrichtung gemäß der zweiten Ausführungsform; und
- Fig. 15: ein schematisches Flussdiagramm eines erfindungsgemäßen Verfahrens zum Herstellen einer Statoranordnung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleichwirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

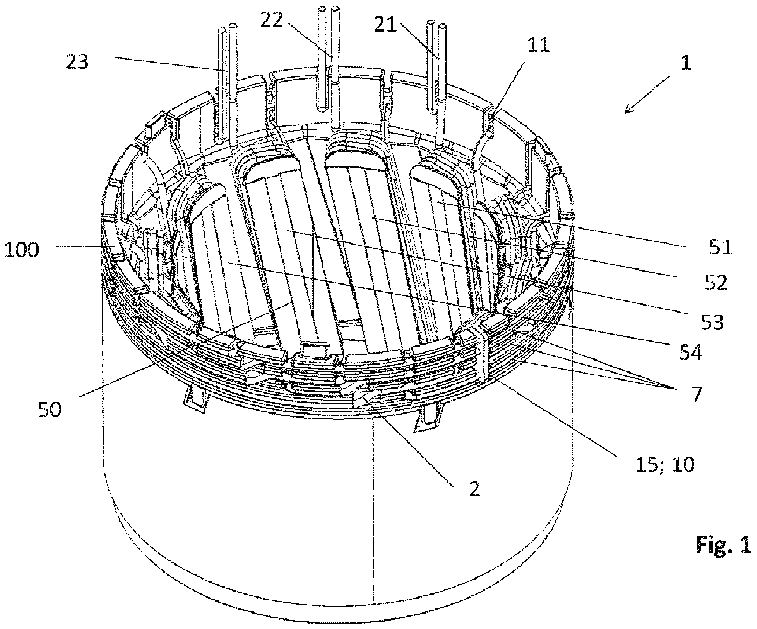

Fig. 1 zeigt eine perspektivische Ansicht einer erfindungsgemäßen Statoranordnung 1 für eine elektrische Maschine gemäß einer ersten Ausführungsform. Die Statoranordnung 1 weist beispielsweise ein Statorblechpaket 50 auf, welches eine Vielzahl von Statorzähnen 51; 52; 53; 54 umfasst. Auf dem Statorblechpaket 50 ist auf einem Endabschnitt der Statorzähne 51; 52; 53; 54 eine Kontaktiereinrichtung 100 angeordnet. Die Kontaktiereinrichtung 100 weist einen ringförmigen Grundkörper 70 auf, welcher z. B. aus Kunststoff ausgebildet ist. Die Statoranordnung 1 weist einen durchgängig gewickelten Wicklungsdraht 2 auf, welcher jeweils um die einzelnen Statorzähne 51; 52; 53; 54 zur Bildung von Statorzahnwicklungen gewickelt, und zwischen den Statorzähnen abschnittweise an der Kontaktiereinrichtung 100 angeordnet ist.

Ferner ist ein Verschaltungselement 10 vorgesehen, welches an der Kontaktiereinrichtung 100 angeordnet ist und ausgebildet ist, in der Nähe der Kontaktiereinrichtung 100 angeordnete Abschnitte des Wicklungsdrahtes 2 zur Bildung eines Sternpunktes 15 elektrisch zu verbinden. Das Verschaltungselement 10 ist somit nur lokal an einer Stelle vorhanden, und verbindet die direkt benachbarten Abschnitte des Wicklungsdrahtes 2.

Die dargestellte Statoranordnung 1 ist beispielsweise eine Statoranordnung 1 für eine 3-Phasige Drehstrommaschine. Beispielsweise haben die Wicklungen der Statorzähne 51, 52 und 53 jeweils getrennte Phasen, wobei der Sternpunkt 15 der Sternschaltung durch die Verbindung des Wicklungsdrahtes 2 mittels des Verschaltungselements 10 gebildet wird.

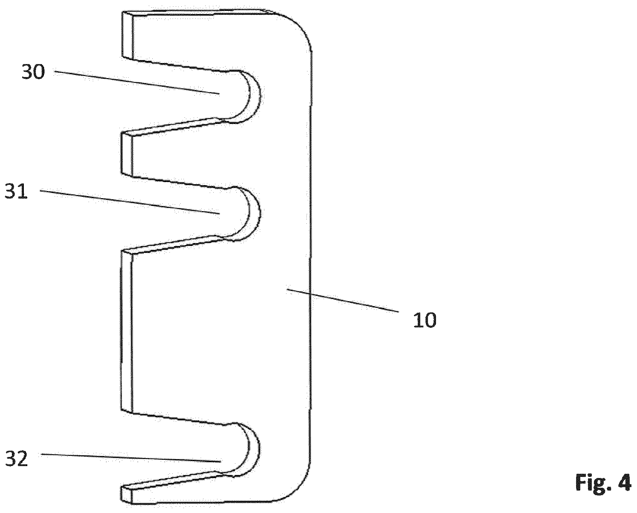

Zuerst wird beispielsweise der Wicklungsdraht 2 um den Statorzahn 53 gewickelt, und dann alle weitere Statorwicklungen, welche dieselbe Phase aufweisen, gewickelt. Die Überführung des Wicklungsdrahtes 2 von einem Statorzahn zum nächsten Statorzahn derselben Phase erfolgt abschnittsweise über die Kontaktiereinrichtung 100. Wenn alle Statorwicklungen der ersten Phase gewickelt sind, wird der Wicklungsdraht 2 zu dem Statorzahn überführt, welcher für die zweite Phase vorgesehen ist. Dann werden alle Statorwicklungen der zweiten Phase gewickelt, wobei die Überführung des Wicklungsdrahtes 2 von einem Statorzahn zum nächsten Statorzahn derselben Phase abschnittsweise über die Kontaktiereinrichtung 100 erfolgt. Dann werden alle Statorwicklungen der dritten Phase gewickelt, wobei die Überführung des Wicklungsdrahtes 2 von einem Statorzahn zum nächsten Statorzahn der dritten Phase abschnittsweise über die Kontaktiereinrichtung 100 erfolgt. Die Bildung des Sternpunktes 15 für die Sternschaltung der drei Phasen erfolgt mittels des Verschaltungselements 10 an der Kontaktiereinrichtung 100. Hierfür werden die Abschnitte des Wicklungsdrahts 2 der ersten Phase, der zweiten Phase, und der dritten Phase elektrisch durch das Verschaltungselement 10 verbunden. Das Verschaltungselement 10 ist in dieser Ausführungsform als Klemme ausgebildet, und in Fig. 4 näher dargestellt.

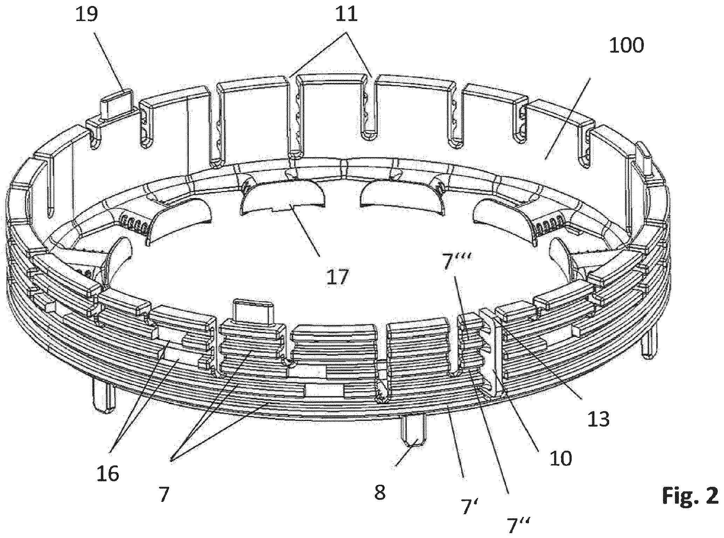

Fig. 2 zeigt eine perspektivische Ansicht der Kontaktiereinrichtung 100 gemäß der ersten Ausführungsform. Die Kontaktiereinrichtung 100 ist beispielsweise aus einem Kunststoff ausgebildet. Die Kontaktiereinrichtung 100 weist einen ringförmigen Grundkörper 70 auf. Zur Lagerung der Kontaktiereinrichtung 100 auf den Statorzähnen 51; 52; 53; 54 sind Positionierungsstifte 8 vorgesehen, welche kraft- und/oder formschlüssig in Ausnehmungen in den Statorzähnen 51; 52; 53; 54, oder in einem Gehäuse (nicht dargestellt) eingreifen.

Ferner weist die Kontaktiereinrichtung 100 eine Vielzahl von Drahtführungen 7 auf, welche auf der Außenseite der Kontaktiereinrichtung 100 in Umfangsrichtung ausgebildet sind. Die Drahtführungen 7 sind ausgebildet, den Wicklungsdraht 2 in Position auf der Kontaktiereinrichtung 100 zu halten. Auf diese Weise kann ein Kurzschluss durch einen Kontakt zweier Wicklungsdrahtabschnitte verhindert werden. Die Drahtführungen 7 sind beispielsweise in mehreren Reihen 7'; 7"; 7"' ausgebildet. Die Drahtführungen 7 sind ausgebildet, den Wicklungsdraht 2 form- und/oder kraftschlüssig aufzunehmen. Beispielsweise sind die Drahtführungen 7 als Nuten ausgebildet. Auch eine keilförmige Ausbildung der Drahtführungen 7 ist denkbar. Die Reihen 7'; 7"; 7'" können beispielsweise parallel zueinander angeordnet sein.

Ferner weist die Kontaktiereinrichtung 100 eine Vielzahl von Drahtdurchführungen 11 auf. Die Drahtdurchführungen 11 sind beispielsweise als Nuten ausgebildet, welche eine vorbestimmte Länge L aufweisen, um den Wicklungsdraht 2 bezüglich der Drahtführungen 7 zu positionieren. Die Drahtdurchführungen 11 können jedoch auch als Löcher oder Kerben ausgebildet sein.

Mittels der Drahtdurchführungen 11 kann der Wicklungsdraht 2 von der Innenseite der Kontaktiereinrichtung 100 zu der Au-ßenseite der Kontaktiereinrichtung 100, und/oder von der Au-ßenseite der Kontaktiereinrichtung 100 zu der Innenseite der Kontaktiereinrichtung 100 geführt werden.

Des Weiteren weist die Kontaktiereinrichtung Drahtübergangsbereiche 16 auf, welche ermöglichen, dass der Wicklungsdraht 2 von einer Reihe 7' von Drahtführungen 7 zu einer weiteren Reihe 7" von Drahtführungen 7 überführt werden kann.

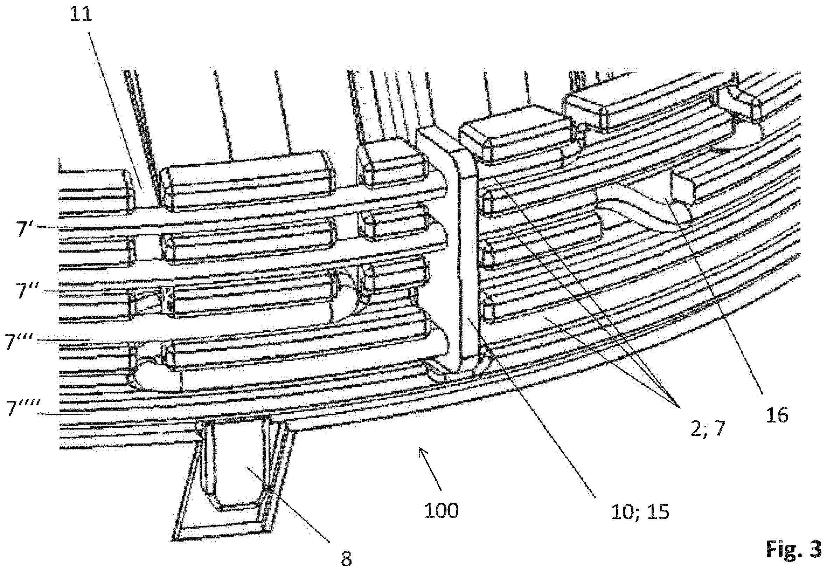

Fig. 3 ist eine Ansicht eines Ausschnittes der erfindungsgemäßen Kontaktiereinrichtung 100 gemäß der ersten Ausführungsform. In dieser Ausführungsform weist die Kontaktiereinrichtung 100 vier Reihen 7'; 7"; 7"'; 7"" von Drahtführungen 7 auf. Ferner weist die Kontaktiereinrichtung 100 Positionierungsstifte 8 auf, um die Kontaktiereinrichtung 100 bezüglich der Statorzähne zu positionieren. Ferner weist die Kontaktiereinrichtung 100 Drahtdurchführungen 11 auf, welche als Nuten ausgebildet sind. Die Drahtdurchführungen 11 weisen jeweils eine vorbestimmte Länge L auf, um den Wicklungsdraht 2 bezüglich einer Drahtführung 7 zu positionieren.

Fig. 4 ist eine Ansicht des Verschaltungselements 10 gemäß der ersten Ausführungsform. Das Verschaltungselement 10 ist beispielsweise als Klemme 10 ausgebildet. Die Klemme 10 weist drei Ausnehmungen 30; 31; und 32 auf, welche zur form- und/oder kraftschlüssigen Aufnahme des Wicklungsdrahtes 2 ausgebildet sind. Die Ausnehmungen 30; 31; 32 weisen hierfür beispielswiese eine keilförmige Form auf. Die Klemme 10 kann beispielsweise als ein Stanzteil aus Blech gefertigt sein. Das Verschaltungselement 10 kann auch als Schweißverbindung und/oder als Schneidklemmkontakt ausgebildet sein.

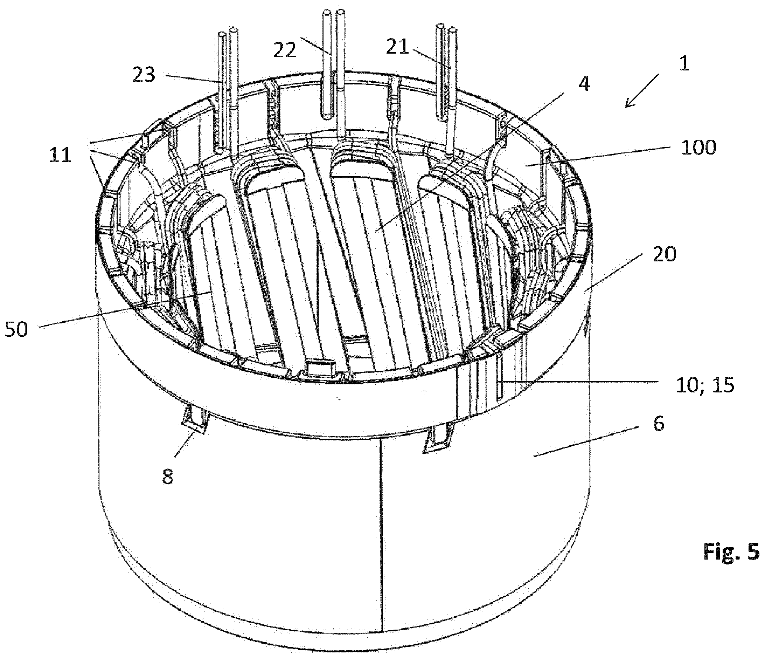

Fig. 5 ist eine perspektivische Ansicht der erfindungsgemäßen Statoranordnung 100 gemäß der ersten Ausführungsform. In dieser Ausführungsform ist ein Gehäuse 6 um das Statorblechpaket 50 angeordnet. Ferner ist in dieser Ausführungsform eine Abdeckung 20 um die Kontaktiereinrichtung 100 angeordnet. Auf diese Weise kann die Statoranordnung 1 gut vor äußeren Umwelteinflüssen geschützt werden. Ferner erkennt man in dieser Ansicht, dass pro Phasenanschluss 21; 22; 23 zwei Wicklungsdrahtabschnitte verwendet werden.

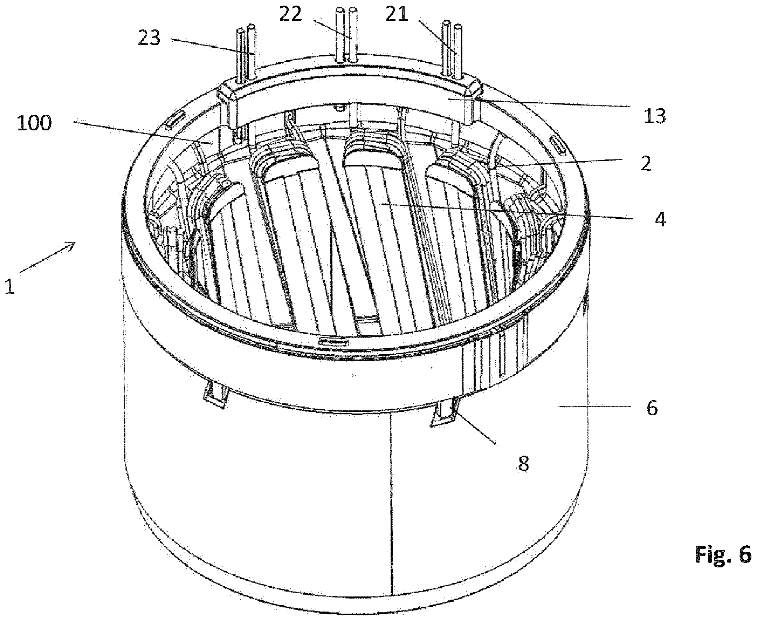

Fig. 6 eine perspektivische Ansicht der Statoranordnung 1 gemäß der ersten Ausführungsform. In dieser Ausführungsform weist die Statoranordnung 1 eine Anschlusseinrichtung 13 auf, welche ausgebildet ist, die Phasenanschlüsse 21; 22; und 23 zum Kontaktieren zu positionieren.

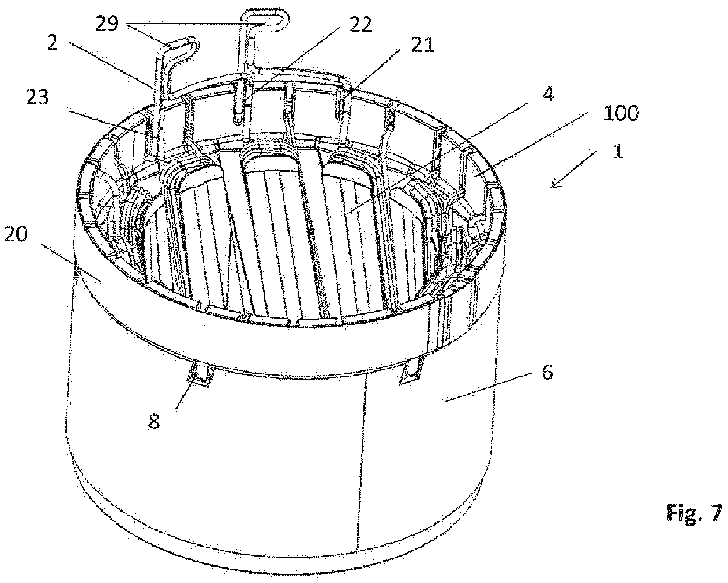

Fig. 7 ist eine perspektivische Ansicht der Statoranordnung 1 gemäß der ersten Ausführungsform. In dieser Ansicht kann man erkennen, wie der Wicklungsdraht 2 zum Ausbilden der Phasenanschlüsse 21; 22; 23 angeordnet wird. Damit für die Ausbildung der Phasenanschlüsse 21; 22; 23 ausreichend Draht vorhanden ist, wird der Wicklungsdraht 2 bei einer Überführung von einer Phasenwicklung zu einer weiteren Phasenwicklung mit einer Schleife 29 versehen, welche genügend Wicklungsdraht 2 zur Ausbildung eines Phasenanschlusses zur Verfügung stellt.

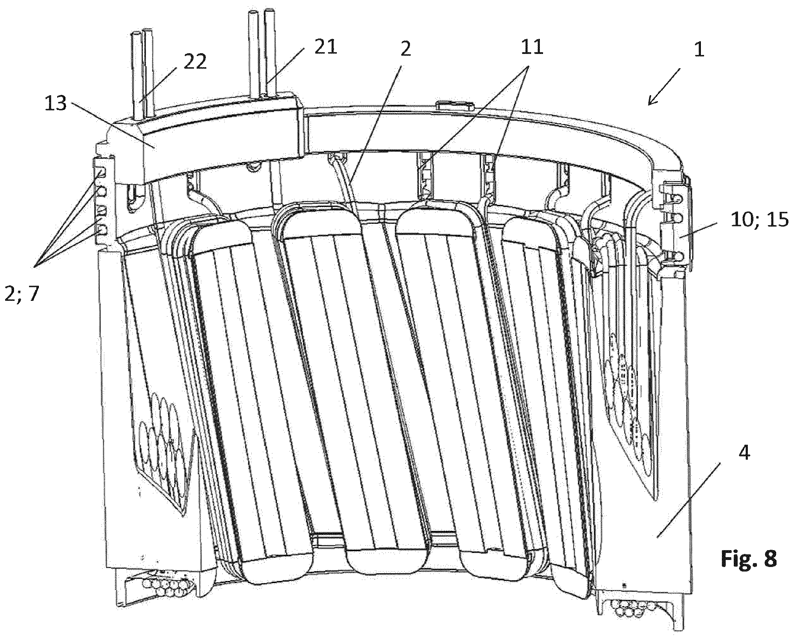

Fig. 8 ist eine Schnittansicht der Statoranordnung 1 gemäß der ersten Ausführungsform. In dieser Ansicht ist die Verschaltung des Sternpunktes 15 mittels des Verschaltungselements 10 gut zu erkennen. Ferner sind der Wicklungsdraht 2 und die Drahtführungen 7 gut zu erkennen. Ferner lässt sich dieser Darstellung die Anordnung der Kontaktiereinrichtung 100 auf dem Endabschnitt 80 der Statorzähne gut erkennen. Die Kontaktiereinrichtung 100 ist beispielsweise an dem Zahnrücken 81 der Statorzähne 51; 52; 53; 54 angeordnet.

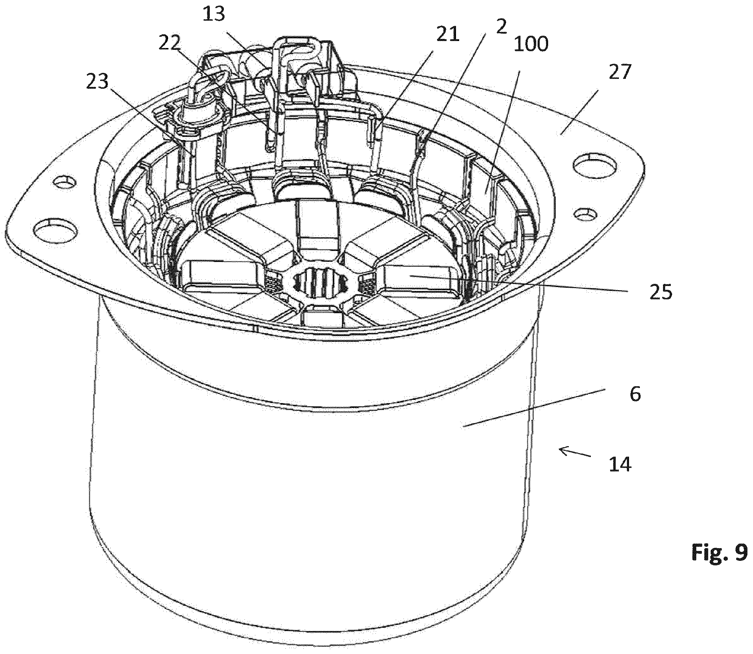

Fig. 9 ist eine perspektivische Ansicht einer erfindungsgemäßen elektrischen Maschine 14 gemäß einer ersten Ausführungsform. Die elektrische Maschine 14 ist beispielsweise als Drehstrommaschine 14 ausgebildet. Die Drehstrommaschine 14 weist einen Rotor 25 auf, welcher eine Vielzahl von Permanentmagneten umfasst. Ferner lässt sich dieser Ansicht entnehmen, wie die Phasenanschlüsse 21; 22; 23 in der Anschlusseinrichtung 13 verschaltet sind. Zur Befestigung der elektrischen Maschine 14 ist ein Flansch 27 vorgesehen, welcher Befestigungslöcher aufweist.

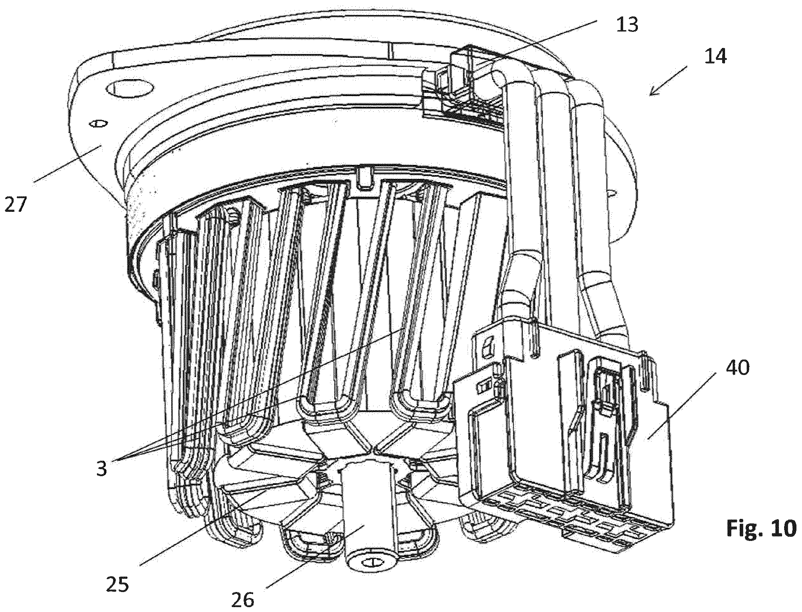

Fig. 10 ist eine perspektivische Ansicht der erfindungsgemäßen elektrischen Maschine 14 gemäß der ersten Ausführungsform. Die elektrische Maschine 14 ist von schräg unten gezeigt. In dieser Darstellung ist eine Welle 26 im Rotor 25 angebracht. Ferner sind die Phasenanschlüsse 21; 22; 23 in einem Stecker 40 untergebracht.

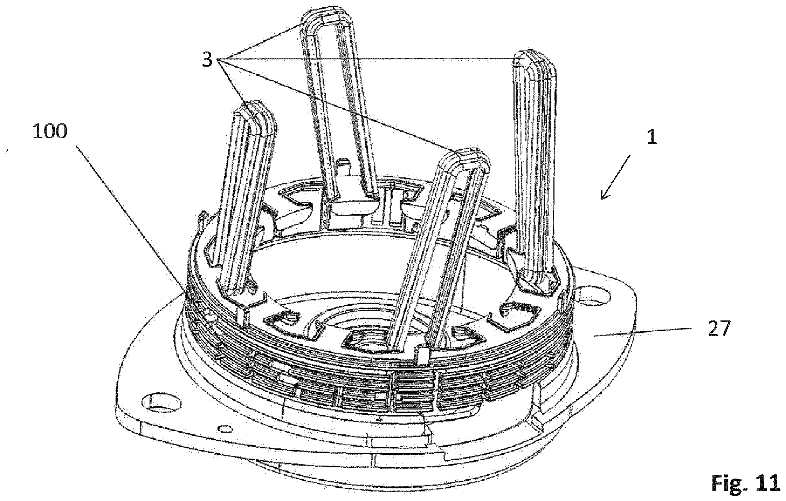

Fig. 11 eine perspektivische Ansicht der erfindungsgemäßen Statoranordnung 1 gemäß der ersten Ausführungsform. In dieser Darstellung wird gezeigt, wie die Statorwicklung 3 für die erste Phase gewickelt ist, wobei die Statorzähne und der Stator nicht gezeigt sind.

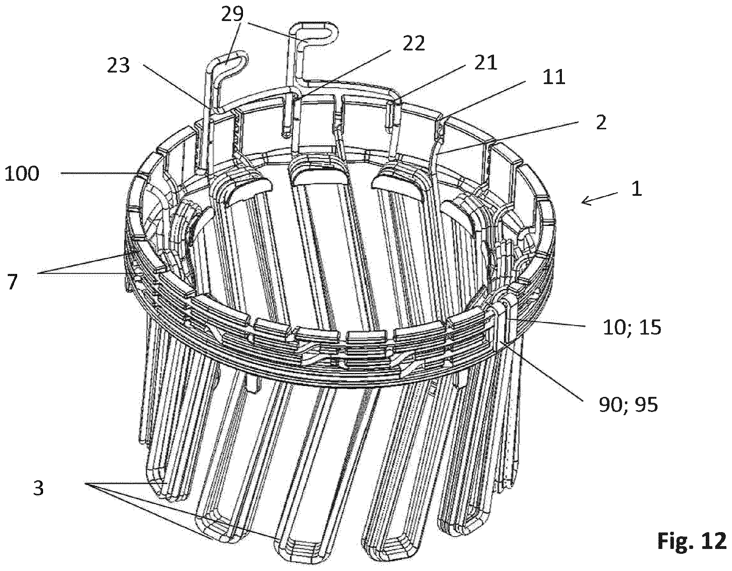

Fig. 12 ist eine perspektivische Ansicht einer erfindungsgemäßen Statoranordnung 1 gemäß einer zweiten Ausführungsform. In dieser Ausführungsform ist ein weiteres Verschaltungselement 90 vorgesehen, welches an der Kontaktiereinrichtung 100 angeordnet und ausgebildet ist, die an der Kontaktiereinrichtung 100 angeordneten Abschnitte des Wicklungsdrahtes 2 zur Bildung zumindest eines zweiten Sternpunktes 95 elektrisch zu verbinden. Das Verschaltungselement 90 und das Verschaltungselement 10 sind in dieser Ausführungsform als ein einfacher Draht ausgebildet, welche mit den entsprechenden Abschnitten des Wicklungsdrahtes 2 heißverstemmt sind. Auch eine Klemme wie im ersten Ausführungsbeispiel gezeigt, und/oder ein Schneidklemmkontakt und/oder eine Schweißverbindung können als Verschaltungselement verwendet werden.

Wie in dieser Ausführungsform dargestellt, sind das erste Verschaltungselement 10 und das weitere Verschaltungselement 90 unmittelbar benachbart zueinander angeordnet. Auf diese Weise reduziert sich der Arbeitsaufwand zur Bildung des zweiten Sternpunktes 95.

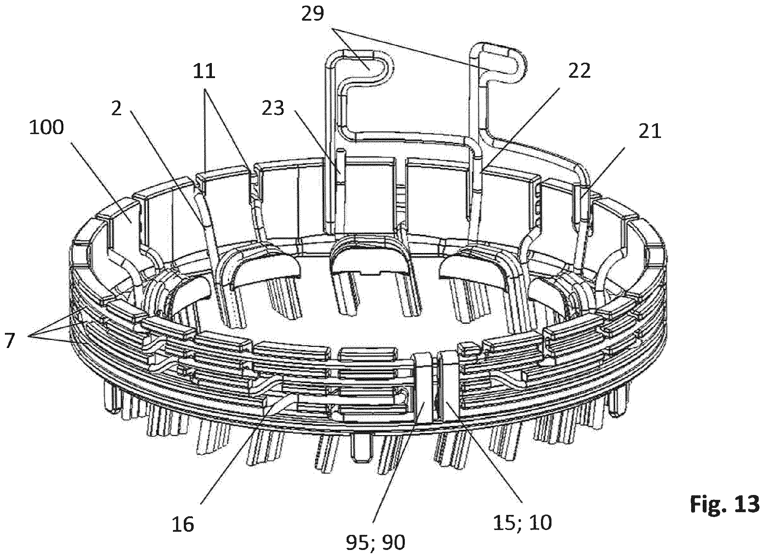

Fig. 13 ist eine perspektivische Ansicht der erfindungsgemäßen Kontaktiereinrichtung 100 gemäß der zweiten Ausführungsform. In dieser Ansicht lassen sich das Verschaltungselement 90 und das Verschaltungselement 10 gut erkennen. Das Verschaltungselement 90 und das Verschaltungselement 10 sind jeweils als Drahtabschnitte ausgebildet, und um die entsprechenden Abschnitte des Wicklungsdrahtes 2 befestigt, um die entsprechenden Abschnitte elektrisch zu verbinden. Beispielsweise sind die Verschaltungselemente 10 und 90 mit den entsprechenden Abschnitten des Wicklungsdrahtes heißverstemmt. Auf diese Weise wird ein erster Sternpunkt 15, und ein weiterer Sternpunkt 95 ausgebildet. Dadurch ergeben sich zwei Sternschaltungen, welche in parallel geschaltet sind. Diese Ausbildung steigert die Betriebssicherheit der Statoranordnung, da zwei redundante Sternschaltungen geschaffen werden. Das Verschaltungselemente 10 und/oder das Verschaltungselement 90 können auch als Schneidklemmkontakte oder als Schweißverbindung ausgebildet sein.

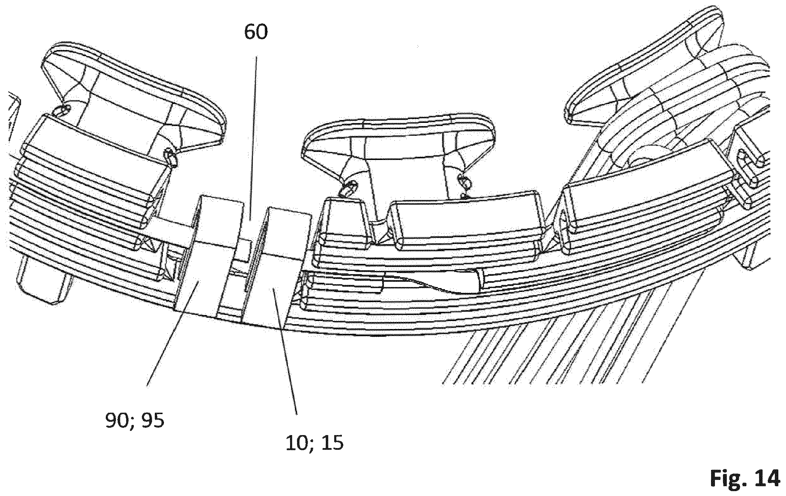

Fig. 14 ist eine Ansicht eines Ausschnittes einer erfindungsgemäßen Kontaktiereinrichtung 100. In dieser Darstellung ist zu sehen, dass zwischen dem Sternpunkt 15 und dem Sternpunkt 90 der Wicklungsdraht eine Trennstelle 60 aufweist.

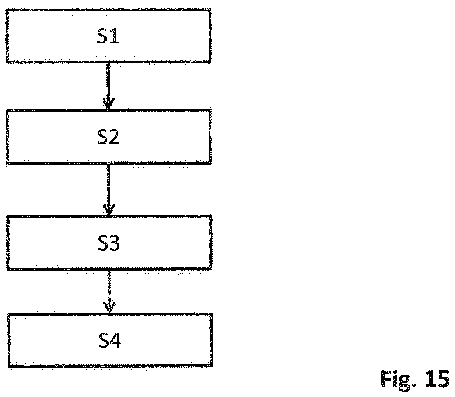

Fig. 15 ist ein schematisches Flussdiagramm eines erfindungsgemäßen Verfahrens zum Herstellen einer Statoranordnung. Im Schritt S1 wird eine Vielzahl von Statorzähnen bereitgestellt. Im Schritt S2 wird eine Kontaktiereinrichtung auf einer Endfläche der Statorzähne angeordnet. Im Schritt S3 werden einzelne Statorzähne zur Bildung von Statorzahnwicklungen mit einem Wicklungsdraht unterbrechungsfrei bewickelt, und der Wicklungsdraht an der Kontaktiereinrichtung angeordnet. Im Schritt S4 werden Abschnitte des auf der Kontaktiereinrichtung angeordneten Wicklungsdrahts zur Bildung eines Sternpunktes elektrisch verbunden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### BEZUGSZEICHENLISTE

- 1: Statoranordnung
- 2: Draht
- 3: Statorzahnwicklung
- 4: Stator
- 6: Gehäuse
- 7: Drahtführung
- 8: Positionierungsstifte für Kontaktierungseinheit
- 10: Verschaltungselement
- 11: Drahtdurchführung
- 13: Anschlusseinrichtung
- 14: Drehstrommaschine
- 15: Sternpunkt
- 16: Drahtübergangsbereich
- 20: Abdeckung
- 21: erster Phasenanschluss
- 22: zweiter Phasenanschluss
- 23: dritter Phasenanschluss
- 25: Rotor
- 26: Welle
- 27: Flansch
- 29: Drahtschleife
- 30: Ausnehmung
- 31: Ausnehmung
- 33: Ausnehmung
- 50: Statorblechpaket
- 51: Statorzahn
- 52: Statorzahn
- 53: Statorzahn
- 54: Statorzahn
- 60: Trennstelle
- 70: Grundkörper
- 80: Endabschnitt Statorzahn
- 81: Zahnrücken
- 90: zweites Verschaltungselement
- 95: zweiter Sternpunkt
- 100: Kontaktiereinrichtung

## Patentansprüche

1. Statoranordnung (1) für eine elektrische Drehstrommaschine (14),
mit einer Vielzahl von Statorzähnen (51; 52; 53; 54),
mit einer Kontaktiereinrichtung (100), welche an einem Endabschnitt (80) der Statorzähne (51; 52; 53; 54) angeordnet ist und einen ringförmigen Grundkörper (70) aufweist,
mit einem durchgängig gewickelten Wicklungsdraht (2), welcher jeweils um einzelne Statorzähne (51; 52; 53; 54) zur Bildung von Statorzahnwicklungen gewickelt ist und welcher zwischen den einzelnen Statorzähnen (51; 52; 53; 54) abschnittweise an der Kontaktiereinrichtung (100) angeordnet ist, wobei die Kontaktiereinrichtung (100) eine Vielzahl von Drahtführungen (7) aufweist, welche in mehreren Reihen (7', 7", 7"', 7"") an der Außenfläche der Kontaktiereinrichtung (100) in Umfangsrichtung vorgesehen sind und welche derart angeordnet und ausgebildet sind, die an der Kontaktiereinrichtung (100) angeordneten Abschnitte des Wicklungsdrahtes (2) ortsfest zu positionieren,
mit einem Verschaltungselement (10), welches an der Kontaktiereinrichtung (100) derart angeordnet und ausgebildet ist, um an der Kontaktiereinrichtung (100) unmittelbar benachbart angeordnete Abschnitte des Wicklungsdrahtes (2) zur Bildung eines Sternpunktes (15) elektrisch zu verbinden.

2. Statoranordnung nach einem der vorhergehenden Ansprüche, **dadurch gekennzeichnet,**
**dass** das Verschaltungselement (10) als Klemme und/oder als Schweißverbindung und/oder als Schneidklemmkontakt ausgebildet ist.

3. Statoranordnung nach einem der vorhergehenden Ansprüche, **dadurch gekennzeichnet,**
**dass** der ringförmige Grundkörper (70) aus Kunststoff ausgebildet ist.

4. Statoranordnung nach einem der vorhergehenden Ansprüche, **dadurch gekennzeichnet,**
**dass** die Kontaktiereinrichtung (100) auf der den Statorzähnen (51, 52; 53; 54) zugewandten Seite Positionierungsstifte (8) aufweist, welche derart angeordnet und ausgebildet sind, die Kontaktiereinrichtung (100) bezüglich der Statorzähne (51; 52; 53; 54) zu positionieren.

5. Statoranordnung nach einem der vorhergehenden Ansprüche, **dadurch gekennzeichnet,**
**dass** die Reihen (7'; 7") von Drahtführungen (7) Drahtübergangsbereiche (16) aufweisen, welche derart angeordnet und ausgebildet sind, den Wicklungsdraht (2) von einer Reihe (7') von Drahtführungen zu einer weiteren Reihe von Drahtführungen (7") zu führen.

6. Statoranordnung nach einem der vorhergehenden Ansprüche, **dadurch gekennzeichnet,**
**dass** die Kontaktiereinrichtung (100) eine Vielzahl von Drahtdurchführungen (11) aufweist, welche auf der den Statorzähnen abgewandten Seite an der Außenfläche der Kontaktiereinrichtung (100) vorgesehen sind und welche zur Durchführung des Wicklungsdrahtes (2) durch die Kontaktiereinrichtung (100) ausgebildet sind.

7. Statoranordnung nach einem der vorhergehenden Ansprüche, **dadurch gekennzeichnet,**
**dass** die Drahtdurchführungen (11) als Nuten ausgebildet sind, welche eine vorbestimmte Länge (L) aufweisen, um den Wicklungsdraht (2) bezüglich einer Drahtführung (7) zu positionieren.

8. Statoranordnung nach einem der vorhergehenden Ansprüche, **dadurch gekennzeichnet,**
**dass** zumindest ein weiteres Verschaltungselement (90) vorgesehen ist, welches an der Kontaktiereinrichtung (100) angeordnet und ausgebildet ist, die an der Kontaktiereinrichtung (100) angeordneten Abschnitte des Wicklungsdrahtes (2) zur Bildung zumindest eines zweiten Sternpunktes (95) elektrisch zu verbinden.

9. Elektrische Drehstrommaschine (14), mit einer Statoranordnung (1) nach einem der Ansprüche 1 bis 8.

10. Verfahren zum Herstellen einer Statoranordnung nach einem der Ansprüche 1 bis 8, mit den Schritten:
Bereitstellen einer Vielzahl von Statorzähnen,
Anordnen einer Kontaktiereinrichtung auf einer Endfläche der Statorzähne,
unterbrechungsfreies Bewickeln einzelner Statorzähne zur Bildung von Statorzahnwicklungen mit einem Wicklungsdraht und Anordnen des Wicklungsdrahts in den Drahtführungen der Kontaktiereinrichtung;
elektrisches Verbinden von unmittelbar benachbart angeordneten Abschnitten des in den Drahtführungen der Kontaktiereinrichtung angeordneten Wicklungsdrahts mit einem Verschaltungselement zur Bildung eines Sternpunktes.

## Claims

1. Stator arrangement (1) for an electric three-phase generator (14),
comprising a plurality of stator teeth (51; 52; 53; 54), comprising a contacting device (100), which is arranged on an end portion (80) of the stator teeth (51; 52; 53; 54) and comprises an annular base body (70),
comprising a continuously wound winding wire (2) which is wound in each case about individual stator teeth (51; 52; 53; 54) in order to form stator tooth windings and portions of which are arranged on the contacting device (100) between the individual stator teeth (51; 52; 53; 54), wherein the contacting device (100) comprises a plurality of wire guides (7), which are provided in multiple rows (7', 7", 7"', 7"") on the outer surface of the contacting device (100) in the peripheral direction and which are arranged and embodied so as to fixedly position the portions of the winding wire (2),
which are arranged on the contacting device (100), comprising a connecting element (10), which is arranged on the contacting device (100) and embodied so as to electrically connect portions of the winding wire (2) which are arranged immediately adjacent to one another on the contacting device (100), in order to form a star point (15).

2. Stator arrangement according to any one of the preceding claims,
**characterised in**
**that** the connecting element (10) is embodied as a clamp and/or as a welded joint and/or as an insulation displacement contact.

3. Stator arrangement according to any one of the preceding claims,
**characterised in**
**that** the annular base body (70) is embodied from synthetic material.

4. Stator arrangement according to any one of the preceding claims,
**characterised in**
**that** the contacting device (100) comprises positioning pins (8) on the side facing the stator teeth (51; 52; 53; 54), said positioning pins being arranged and embodied so as to position the contacting device (100) with respect to the stator teeth (51; 52; 53; 54).

5. Stator arrangement according to any one of the preceding claims,
**characterised in**
**that** the rows (7'; 7") of wire guides (7) comprise wire transition regions (16) which are arranged and embodied so as to guide the winding wire (2) from one row (7') of wire guides to another row of wire guides (7").

6. Stator arrangement according to any one of the preceding claims,
**characterised in**
**that** the contacting device (100) comprises a plurality of wire feedthroughs (11) which are provided on the outer surface of the contacting device (100) on the side remote from the stator teeth and which are embodied so as to feed the winding wire (2) through the contacting device (100) .

7. Stator arrangement according to any one of the preceding claims,
**characterised in**
**that** the wire feedthroughs (11) are embodied as slots which have a predetermined length (L) in order to position the winding wire (2) with respect to a wire guide (7).

8. Stator arrangement according to any one of the preceding claims,
**characterised in**
**that** at least one additional connecting element (90) is provided, which is arranged on the contacting device (100) and embodied so as to electrically connect the portions of the winding wire (2), which are arranged on the contacting device (100), in order to form at least one second star point (95).

9. Electric three-phase generator (14), comprising a stator arrangement (1) according to any one of claims 1 to 8.

10. Method for producing a stator arrangement according to any one of claims 1 to 8, comprising the steps of:
providing a plurality of stator teeth,
arranging a contacting device on an end face of the stator teeth,
winding individual stator teeth with a winding wire in an uninterrupted manner in order to form stator tooth windings and arranging the winding wire in the wire guides of the contacting device;
electrically connecting portions of the winding wire, which are arranged immediately adjacent to one another, in the wire feedthroughs of the contacting device to a connecting element in order to form a star point.

## Revendications

1. Agencement de stator (1) pour une machine électrique triphasée (14),
comportant une pluralité de dents de stator (51 ; 52 ; 53 ; 54),
comportant un dispositif de contact (100) qui est disposé sur une partie d'extrémité (80) des dents de stator (51 ; 52 ; 53 ; 54) et présente un corps de base annulaire (70),
comportant un fil d'enroulement (2) enroulé en continu qui est enroulé chaque fois autour de dents de stator individuelles (51 ; 52 ; 53 ; 54) pour former des enroulements de dents de stator et dont certaines parties sont disposées sur le dispositif de contact (100), le dispositif de contact (100) présentant une pluralité de guides de fil (7) qui sont prévus en plusieurs rangées (7', 7", 7"', 7"") sur la surface extérieure du dispositif de contact (100) dans la direction circonférentielle et qui sont disposés et conçus pour positionner de manière fixe les parties du fil d'enroulement (2) disposées sur le dispositif de contact (100),
comportant un élément de connexion (10) qui est disposé sur le dispositif de contact (100) et conçu pour relier électriquement des parties du fil d'enroulement (2) disposées de manière directement adjacente sur le dispositif de contact (100) pour former un point neutre (15).

2. Agencement de stator selon l'une des revendications précédentes, **caractérisé en ce**
**que** l'élément de connexion (10) est réalisé sous la forme d'une borne et/ou d'une liaison soudée et/ou d'un contact à déplacement d'isolant.

3. Agencement de stator selon l'une des revendications précédentes, **caractérisé en ce**
**que** le corps de base annulaire (70) est réalisé en matière plastique.

4. Agencement de stator selon l'une des revendications précédentes, **caractérisé en ce**
**que** le dispositif de contact (100) présente, du côté tourné vers les dents de stator (51, 52 ; 53 ; 54), des broches de positionnement (8) qui sont disposées et conçues pour positionner le dispositif de contact (100) par rapport aux dents de stator (51 ; 52 ; 53 ; 54).

5. Agencement de stator selon l'une des revendications précédentes, **caractérisé en ce**
**que** les rangées (7' ; 7") de guides de fil (7) présentent des zones de transfert de fil (16) qui sont disposées et conçues pour guider le fil d'enroulement (2) d'une rangée (7') de guides de fil vers une autre rangée de guides de fil (7").

6. Agencement de stator selon l'une des revendications précédentes, **caractérisé en ce**
**que** le dispositif de contact (100) présente une pluralité de passages de fil (11) qui sont prévus du côté opposé aux dents de stator sur la surface extérieure du dispositif de contact (100) et qui sont conçues pour faire passer le fil d'enroulement (2) à travers le dispositif de contact (100).

7. Agencement de stator selon l'une des revendications précédentes, **caractérisé en ce**
**que** les passages de fil (11) sont réalisés sous la forme d'encoches qui présentent une longueur (L) prédéterminée pour positionner le fil d'enroulement (2) par rapport à un guide de fil (7).

8. Agencement de stator selon l'une des revendications précédentes,
**caractérisé en ce**
**qu'**il est prévu au moins un autre élément de connexion (90) qui est disposé sur le dispositif de contact (100) et qui est conçu pour relier électriquement les parties du fil d'enroulement (2) disposées sur le dispositif de contact (100) pour former au moins un deuxième point neutre (95).

9. Machine électrique triphasée (14) comprenant un agencement de stator (1) selon l'une des revendications 1 à 8.

10. Procédé de fabrication d'un agencement de stator selon l'une des revendications 1 à 8, comprenant les étapes consistant à :
mettre à disposition une pluralité de dents de stator,
disposer un dispositif de contact sur une surface d'extrémité des dents de stator,
enrouler de manière ininterrompue un fil d'enroulement autour des dents de stator individuelles pour former des enroulements de dents de stator et disposer le fil d'enroulement dans les guides de fil du dispositif de contact ;
relier électriquement des parties disposées de manière directement adjacente du fil d'enroulement disposé dans les guides de fil du dispositif de contact à un élément de connexion pour former un point neutre.
